(19) Europäisches Patentamt
European Patent Office
Office européen des brevets

(11) **EP 4 307 318 A1**

(12) **EUROPEAN PATENT APPLICATION**
published in accordance with Art. 153(4) EPC

(43) Date of publication:
**17.01.2024 Bulletin 2024/03**

(51) International Patent Classification (IPC):
*H01B 1/06* (2006.01)    *H01B 1/10* (2006.01)
*H01M 10/0562* (2010.01)

(21) Application number: **22766899.3**

(22) Date of filing: **28.02.2022**

(52) Cooperative Patent Classification (CPC):
**H01B 1/06; H01B 1/10; H01M 10/0562;** Y02E 60/10

(86) International application number:
**PCT/JP2022/008382**

(87) International publication number:
**WO 2022/190940 (15.09.2022 Gazette 2022/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.03.2021 JP 2021039747**

(71) Applicant: **Mitsui Mining & Smelting Co., Ltd.
Shinagawa-ku
Tokyo 141-8584 (JP)**

(72) Inventors:
• **ITO, Takahiro
Ageo-shi, Saitama 362-0021 (JP)**
• **ICHIKI, Katsuya
Ageo-shi, Saitama 362-0021 (JP)**

(74) Representative: **Novagraaf Technologies
Bâtiment O2
2, rue Sarah Bernhardt
CS90017
92665 Asnières-sur-Seine Cedex (FR)**

(54) **SOLID ELECTROLYTE AND METHOD FOR PRODUCING SAME**

(57) A solid electrolyte contains Li, P, S, and halogen. The halogen contains at least Br. The solid electrolyte has a crystalline phase having an argyrodite-type crystal structure. The solid electrolyte has a peak A in a range of $2\theta = 25.2 \pm 1.0°$ in an X-ray diffraction pattern measured by an X-ray diffractometer (XRD) using $Cu k\alpha 1$ as a radiation source. When the peak A is separated into two peaks consisting of a peak A1 and a peak A2 through waveform separation, an intensity of the peak A1 is taken as $I_{A1}$, and an intensity of the peak A2 is taken as $I_{A2}$, $I_{A2}/I_{A1}$ is 0.37 or more. When a half-value width of the peak A1 is taken as $W_{A1}$, and a half-value width of the peak A2 is taken as $W_{A2}$, $W_{A2}/W_{A1}$ is 3.2 or more.

[Fig. 2]

**EP 4 307 318 A1**

## Description

### Technical Field

The present invention relates to a solid electrolyte and a method for producing the same. The present invention also relates to an electrode material mixture, a solid electrolyte layer, and a battery containing the solid electrolyte.

### Background Art

In recent years, solid electrolytes have been attracting attention as a substitute for the electrolyte used in many liquid batteries. Solid-state batteries using solid electrolytes are expected to be put into practical use as batteries that are safer and have a higher energy density compared with liquid batteries using flammable organic solvents. For example, sulfide solid electrolytes containing a lithium (Li) element, a phosphorus (P) element, a sulfur (S) element, and a halogen element have been proposed as solid electrolytes (Patent Literatures 1 and 2).

### Citation List

Patent Literature

Patent Literature 1: US 2016/156064A1
Patent Literature 2: US 2019/148769A1

### Summary of Invention

Sulfide solid electrolytes may generate hydrogen sulfide in low dew point environments, for example, in dry rooms.
Therefore, it is an object of the present invention to provide a solid electrolyte in which generation of hydrogen sulfide is suppressed.
The present invention provides a solid electrolyte containing a lithium (Li) element, a phosphorus (P) element, a sulfur (S) element, and a halogen (X) element,

wherein the halogen (X) element contains at least a bromine (Br) element,
the solid electrolyte has a crystalline phase having an argyrodite-type crystal structure,
the solid electrolyte has a peak A in a range of $2\theta = 25.2 \pm 1.0°$ in an X-ray diffraction pattern measured by an X-ray diffractometer (XRD) using Cuk$\alpha$1 as a radiation source,
when the peak A is separated into two peaks consisting of a peak A1 and a peak A2 through waveform separation, an intensity of the peak A1 is taken as $I_{A1}$, and an intensity of the peak A2 is taken as $I_{A2}$, a ratio ($I_{A2}/I_{A1}$) of the $I_{A2}$ to the $I_{A1}$ is 0.37 or more, and
when a half-value width of the peakA1 is taken as $W_{A1}$, and a half-value width of the peak A2 is taken as $W_{A2}$, a ratio ($W_{A2}/W_{A1}$) of the $W_{A2}$ to the $W_{A1}$ is 3.2 or more.

### Brief Description of Drawings

[Fig. 1] Fig. 1 is a flowchart of waveform separation of diffraction peaks.
[Fig. 2] Fig. 2 is a graph showing results of waveform separation of diffraction peaks of a solid electrolyte obtained in Example 1.

### Description of Embodiments

Hereinafter, the present invention will be described based on preferred embodiments thereof. A solid electrolyte of the present invention is constituted by a crystalline material containing a crystalline phase with an argyrodite-type crystal structure. An argyrodite-type crystal structure refers to a crystal structure possessed by a group of compounds derived from a mineral represented by the chemical formula $Ag_8GeS_6$. The solid electrolyte of the present invention preferably has a crystalline phase with an argyrodite-type crystal structure in order to enhance the lithium ion conductivity of the solid electrolyte. Whether or not the solid electrolyte of the present invention has a crystalline phase with an argyrodite-type crystal structure can be determined through measurement using an X-ray diffractometer (XRD) or the like.

The solid electrolyte of the present invention has a crystalline phase with an argyrodite-type crystal structure, and further contains a lithium (Li) element, a phosphorus (P) element, a sulfur (S) element, and a halogen (X) element as constituent elements. An X-ray diffraction pattern attributed to a crystalline phase with an argyrodite-type crystal structure differs depending on the composition of the crystalline phase. If the solid electrolyte of the present invention contains the above-mentioned elements, the solid electrolyte has a characteristic peak A attributed to a crystalline phase with an argyrodite-type crystal structure, in the range of $2\theta = 25.2 \pm 1.0°$ in an X-ray diffraction pattern measured by an XRD using $CuK\alpha 1$ as a radiation source.

The solid electrolyte of the present invention may further exhibit peaks in the ranges of $2\theta = 15.3° \pm 1.0°$, $17.7° \pm 1.0°$, $30.0° \pm 1.0°$, $30.9° \pm 1.0°$, and $44.3° \pm 1.0°$, in addition to the peak A.

The solid electrolyte of the present invention may further exhibit peaks in the ranges of $2\theta = 47.2° \pm 1.0°$, $51.7° \pm 1.0°$, $58.3° \pm 1.0°$, $60.7° \pm 1.0°$, $61.5° \pm 1.0°$, $70.4° \pm 1.0°$, and $72.6° \pm 1.0°$, in addition to the above-mentioned diffraction peaks, depending on the composition of elements constituting the solid electrolyte.

For example, data of PDF No. 00-034-0688 can be used to identify peaks attributed to an argyrodite-type crystal structure.

In the present invention, when the peak A observed in the range of $2\theta = 25.2 \pm 1.0°$ is separated into two peaks consisting of a peak A1 and a peak A2 through waveform separation, the peak A1 and the peak A2 preferably satisfy a later-described relationship, from the viewpoint of effectively suppressing generation of hydrogen sulfide while maintaining high lithium ion conductivity. The reason as to why the diffraction peak observed in the range of $2\theta = 25.2 \pm 1.0°$ is selected as a target diffraction peak is that the diffraction peak in this range is less susceptible to the diffraction peaks of impurities and the like, and can be accurately separated.

The peak A being separated into the peak A1 and the peak A2 through waveform separation means that the solid electrolyte of the present invention has another crystalline phase in addition to the crystalline phase with the argyrodite-type crystal structure. In the solid electrolyte of the present invention, the crystalline phase with the argyrodite-type crystal structure is preferably the main phase. In the present invention, the peak with higher intensity of the peak A1 and the peak A2 is the peak A1 attributed to the crystalline phase with the argyrodite-type crystal structure. Meanwhile, the peak with lower intensity is the peak A2 attributed to a crystalline phase other than the crystalline phase with the argyrodite-type crystal structure. The degree of presence of the other crystalline phase in the solid electrolyte of the present invention can be evaluated by the peak intensity and the half-value width.

As for the peak intensity, the larger the ratio of the intensity of the peak A2 to the intensity of the peak A1 is, the larger the ratio of the presence of the other crystalline phase is determined as being.

As for the half-value width, the larger the ratio of the half-value width of the peak A2 to the half-value width of the peak A1 is, the lower the crystallinity of the other crystalline phase is determined as being.

The "main phase" refers to the phase with the largest proportion in the total amount of all crystalline phases constituting the solid electrolyte. Therefore, the percentage of the crystalline phase with the argyrodite-type crystal structure contained in the solid electrolyte is preferably 60% by mass or more, more preferably 70% by mass or more, even more preferably 80% by mass or more, and even more preferably 90% by mass or more, with respect to all crystalline phases constituting the solid electrolyte, for example. The percentage of the crystalline phase can be determined using an XRD, for example.

The intensities of the peak A1 and the peak A2 preferably satisfy Formula (1) below.

$$I_{A2}/I_{A1} \geq 0.37 \qquad (1)$$

In Formula (1), $I_{A1}$ represents the peak intensity of the peak A1, and $I_{A2}$ represents the peak intensity of the peak A2. In the present description, a peak intensity refers to the height of a peak from the baseline in an XRD diffraction pattern. A solid electrolyte in which the ratio ($I_{A2}/I_{A1}$) of the $I_{A2}$ to the $I_{A1}$ satisfies Formula (1) effectively suppresses generation of hydrogen sulfide while exhibiting high lithium ion conductivity. From the viewpoint of making this advantage more remarkable, $I_{A2}/I_{A1}$ is more preferably 0.40 or more, and even more preferably 0.43 or more.

$I_{A2}/I_{A1}$ is preferably $I_{A2}/I_{A1} \leq 1.40$ from the viewpoint of ensuring sufficient lithium ion conductivity for the function of a solid electrolyte while maintaining the effect of suppressing generation of hydrogen sulfide. From the viewpoint of making this advantage more remarkable, $I_{A2}/I_{A1}$ is more preferably 1.00 or less, and even more preferably 0.60 or less.

The half-value widths of the peak A1 and the peak A2 preferably satisfy Formula (2) below.

$$W_{A2}/W_{A1} \geq 3.2 \qquad (2)$$

In Formula (2), $W_{A1}$ represents the half-value width of the peak A1, and $W_{A2}$ represents the half-value width of the peak A2. A solid electrolyte in which the ratio ($W_{A2}/W_{A1}$) of the $W_{A2}$ to the $W_{A1}$ satisfies Formula (2) effectively suppresses generation of hydrogen sulfide while exhibiting high lithium ion conductivity. From the viewpoint of making this advantage more remarkable, $W_{A2}/W_{A1}$ is more preferably 3.4 or more, and even more preferably 3.6 or more.

$W_{A2}/W_{A1}$ is preferably $W_{A2}/W_{A1} \leq 15.0$ from the viewpoint of ensuring sufficient lithium ion conductivity for the function of a solid electrolyte for another crystal structures from which the peak A2 is derived. From the viewpoint of making this advantage more remarkable, $W_{A2}/W_{A1}$ is more preferably 10.0 or less, and even more preferably 7.0 or less.

The peak A1 and the peak A2 are both observed at the positions of $2\theta = 25.2 \pm 1.0°$. The position of the peak top of the peak A1 and the position of the peak top of the peak A2 are generally the same, and the difference therebetween is preferably within 0.5°, and more preferably within 0.1°, from the viewpoint of effectively suppressing generation of hydrogen sulfide while maintaining high lithium ion conductivity.

To ensure that the solid electrolyte of the present invention satisfies Formulas (1) and (2) above, it is sufficient to produce the solid electrolyte using a method, which will be described later, for example.

The inventors of the present invention conducted research and found that the waveform separation of diffraction peaks can be accurately performed by approximating the peak A1, which is a main peak, using a Gaussian function and approximating the peak A2, which is a peak attributed to a crystalline phase other than the argyrodite-type crystal structure, using an asymmetric double sigmoidal function.

The Gaussian function $y_g$ is represented by Formula (3) below. In the formula, $A_g$ is a constant corresponding to the peak intensity, $x_{cg}$ is a constant representing the peak position, and $w_g$ is a constant corresponding to the peak width.

$$y_g = A_g e^{-\dfrac{(x - x_{cg})^2}{2w_g^2}} \qquad (1)$$

The asymmetric double sigmoidal function $y_s$ is represented by Formula (4) below. In the formula, $A_s$ is a constant corresponding to the peak intensity, $x_{cs}$ is a constant representing the peak position, $w_{1s}$ is a constant corresponding to the peak width, and $w_{2s}$ and $w_{3s}$ are constants corresponding to the peak width biases.

$$y_s = A_s \dfrac{1}{1 + e^{-\dfrac{x - x_{cs} + w_{1s}/2}{w_{2s}}}} \left(1 - \dfrac{1}{1 + e^{-\dfrac{x - x_{cs} - w_{1s}/2}{w_{3s}}}}\right) \qquad (2)$$

Waveform separation and curve fitting of diffraction peaks can be performed using appropriate software or the like. Examples thereof include a least squares method using the solver function of the spreadsheet software Excel (Microsoft).

Specifically, fitting is performed by minimizing a reliability factor R represented by Formula (5) below in a GRG nonlinear manner using the solver function. $I(2\theta)$ in Formula (5) represents the signal intensity of real data. Also, $P(2\theta)$ in Formula (5) is the fitting curve. Specifically, as shown in Formula (6), $P(2\theta)$ is represented by the sum of the Gaussian function $y_g$ corresponding to the peak A1, the asymmetric double sigmoidal function $y_s$ corresponding to the peak A2, and the constant yo corresponding to the baseline.

The range of diffraction angle $2\theta$ for calculating the reliability factor R may be any range that encompasses diffraction peaks observed in the range of $2\theta = 25.2 \pm 1.0°$. For example, the range may be set to a range between 23.0° to 27.0°.

The parameters used in the fitting are the constants $A_g$, $x_{cg}$, and $W_g$ for the Gaussian function of the peak A1 represented by Formula (3) and the constants $A_s$, $x_{cs}$, $W_{1s}$, $W_{2s}$, and $W_{3s}$ and the baseline $y_0$ for the asymmetric double sigmoidal function of the peak A2 represented by Formula (4). Only in the case in which the R factor is 20% or less, it is determined that the curve fitting have converged, and, if the R factor diverges or if the value becomes greater than 20%, the procedure advances to the next step.

$$R = \frac{\sum_{2\theta}|I(2\theta) - P(2\theta)|}{\sum_{2\theta} I(2\theta)} \times 100 \qquad (3)$$

$$P(2\theta) = y_0 + y_g + y_s \qquad (4)$$

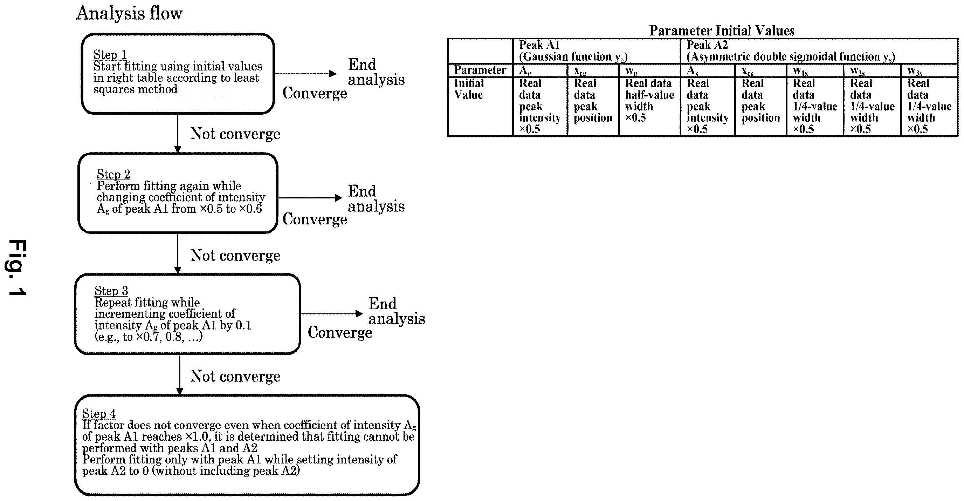

The specific waveform separation of diffraction peaks is performed according to the flowchart shown in Fig. 1. This flowchart will be described below in detail.

First, in Step 1, curve fitting is performed using the initial values shown in the table for the constants $A_g$, $x_{cg}$, and $W_g$ for the Gaussian function of the peak A1 represented by Formula (3) and the constants $A_s$, $x_{cs}$, $W_{1s}$, $W_{2s}$, and $W_{3s}$ for the asymmetric double sigmoidal function of the peak A2 represented by Formula (4). If the R factor in the curve fitting have converged, the analysis is ended at that time, and the peak A1 and the peakA2 are determined.

The definitions of terms in Fig. 1 are as follows.

"Real data peak intensity" refers to the value obtained by subtracting the baseline from the height of a signal at the vertex of the peak with the highest intensity out of the diffraction peaks observed in the range of $2\theta = 25.2 \pm 1.0°$.

"Real data peak position" refers to the value of the diffraction angle $2\theta$ of a signal at the vertex of the peak with the highest intensity out of the diffraction peaks observed in the range of $2\theta = 25.2 \pm 1.0°$.

"Real data half-value width" refers to the absolute value of the difference between diffraction angles $2\theta$ of signals at points where the intensity from which the baseline has been subtracted is 1/2 of the real data peak intensity, in the diffraction peaks observed in the range of $2\theta = 25.2 \pm 1.0°$. If there are three or more diffraction angles $2\theta$ of signals at points where the intensity is 1/2 of the real data peak intensity, the difference between signals at two points respectively closest to the real data peak position on the high angle side thereof and closest to the real data peak position on the low angle side thereof may be used.

"Real data 1/4-value width" refers to the absolute value of the difference between diffraction angles $2\theta$ of signals at points where the intensity from which the baseline has been subtracted is 1/4 of the real data peak intensity, in the diffraction peaks observed in the range of $2\theta = 25.2 \pm 1.0°$. If there are three or more diffraction angles $2\theta$ of signals at points where the intensity is 1/4 of the real data peak intensity, the difference between signals at two points respectively closest to the real data peak position on the high angle side thereof and closest to the real data peak position on the low angle side thereof may be used.

If the R factor does not converge in Step 1, the procedure advances to Step 2 where the initial values are changed according to the rules shown in Fig. 1 and curve fitting is performed again. If the R factor in the curve fitting have converged, the analysis is ended at that time, and the peakA1 and the peakA2 are determined.

If the R factor does not converge in Step 2, the procedure advances to Step 3 where the initial values are further changed according to the rules shown in Fig. 1 and curve fitting is performed again. If the R factor in the curve fitting have converged, the analysis is ended at that time, and the peakA1 and the peakA2 are determined.

If the R factor does not converge in Step 3, the procedure advances to Step 4 where the initial values are further changed according to the rules shown in Fig. 1 and curve fitting is performed again. If the R factor in the curve fitting have converged, the analysis is ended at that time, and the peak A1 and the peak A2 are determined. If the R factor in the curve fitting does not converge, it is determined that curve fitting cannot be performed using the Gaussian function and the asymmetric double sigmoidal function, the curve fitting is performed using only the Gaussian function, and only the peak A1 is determined. It is determined that the intensity of the peak A2 is 0.

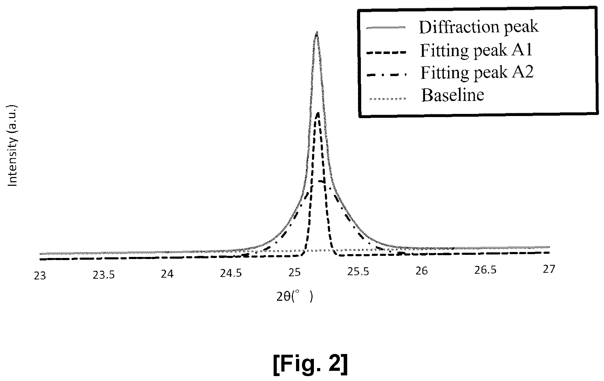

An example of the thus obtained results of waveform separation are shown in Fig. 2. Fig. 2 shows results of waveform separation of diffraction peaks of a solid electrolyte obtained in Example 1. As shown in the graph, the diffraction peak A is separated into the peak A1 approximated using the Gaussian function and the peak A2 approximated using the asymmetric double sigmoidal function.

The peak intensity $I_{A1}$ and the half-value width $W_{A1}$ can be calculated using a function $y_g$ representing the peak A1 obtained through the curve fitting. Specifically, the highest value of the function $y_g$ is taken as the peak intensity $I_{A1}$, and the difference between the diffraction angles $2\theta$ at two points where the intensity is 1/2 of $I_{A1}$ is taken as the half-value width $W_{A1}$. In a similar manner, the peak intensity $I_{A2}$ and the half-value width $W_{A2}$ can be calculated using a function $y_s$ representing the peak A2 obtained through the curve fitting. Specifically, the highest value of the function $y_s$ is taken as the peak intensity $I_{A2}$, and the difference between the diffraction angles $2\theta$ at two points where the intensity is 1/2 of $I_{A2}$ is taken as the half-value width $W_{A2}$.

In the present invention, from the viewpoint of achieving higher lithium ion conductivity and more effectively suppressing generation of hydrogen sulfide, it is advantageous to control the composition of the constituent elements of the solid electrolyte. Specifically, X/P, which is the molar ratio of the X element to the P element, is set preferably to 1.0 to 3.0. Furthermore, the X/P molar ratio is set more preferably to 1.2 to 2.8, and even more preferably to 1.3 to 2.5.

As for the composition of the constituent elements of the solid electrolyte, it is also advantageous to control the molar ratio of the S element to the P element. Specifically, S/P, which is the molar ratio of the S element to the P element, is set preferably to 3.0 to 5.0. Furthermore, the S/P molar ratio is set more preferably to 3.5 to 4.8, and even more preferably to 4.0 to 4.5, in order to achieve higher lithium ion conductivity of the solid electrolyte and more effectively suppress generation of hydrogen sulfide.

Furthermore, as for the composition of the constituent elements of the solid electrolyte, the solid electrolyte preferably contains at least a Br element as a X element, in order to achieve higher lithium ion conductivity of the solid electrolyte and more effectively suppress generation of hydrogen sulfide. The percentage (mol%) of the Br element in the X element is preferably 50% or more, more preferably 60% or more, even more preferably 70% or more, even more preferably 80% or more, and even more preferably 90% or more, for example. The percentage of the Br element may be 100%. That is to say, the solid electrolyte may contain only the Br element as the X element. If the solid electrolyte contains another X element in addition to the Br element as the X element, examples of the other X element include a chlorine (Cl) element, a fluorine (F) element, and an iodine (I) element, and it is particularly preferable to use a Cl element.

The solid electrolyte of the present invention is preferably represented by the compositional formula $Li_aPS_bX_c$ (X is a halogen element containing at least a Br element) from the viewpoint of enhancing the lithium ion conductivity of the solid electrolyte.

In the composition formula above, a indicating the molar ratio of the lithium element is preferably from 3.0 to 6.5, more preferably from 3.2 to 6.5, and even more preferably from 3.4 to 6.5, for example.

In the composition formula above, b indicating the molar ratio of the sulfur element is preferably from 3.5 to 4.8, more preferably from 3.8 to 4.6, and even more preferably from 4.0 to 4.6, for example.

In the composition formula above, c is preferably from 0.1 to 3.0, more preferably from 0.2 to 2.8, and even more preferably from 0.4 to 2.5, for example.

A solid electrolyte having compositions in which *a*, *b,* and *c* are within these ranges has sufficiently high lithium ion conductivity.

The solid electrolyte of the present invention may contain elements other than the Li element, the P element, the S element, and the X element. For example, the Li element may be partially replaced by other alkali metal elements, the P element may be partially replaced by other pnictogen elements, or the S element may be partially replaced by other chalcogen elements.

The solid electrolyte of the present invention has lithium ion conductivity in a solid state. The solid electrolyte of the present invention has lithium ion conductivity of preferably 0.5 mS/cm or more, more preferably 1.0 mS/cm or more, even more preferably 1.5 mS/cm or more, and even more preferably 1.7 mS/cm or more, for example, at room temperature, that is, at 25°C. The lithium ion conductivity can be measured using a method described in "Examples", which will be described later.

The solid electrolyte of the present invention is preferably constituted by a power that is an aggregation of particles. The solid electrolyte of the present invention has a particle size of preferably 10 $\mu$m or less, more preferably 8.0 $\mu$m or less, and even more preferably 7.0 $\mu$m or less, for example, in terms of the volume-based cumulative particle size $D_{50}$ at a cumulative volume of 50 vol% as measured using a laser diffraction scattering particle size distribution measurement method. Meanwhile, the volume-based cumulative particle size $D_{50}$ is preferably 0.1 $\mu$m or more, more preferably 0.3 $\mu$m or more, and even more preferably 0.5 $\mu$m or more, for example. If the particle size is set within this range, the contact points and the contact area between particles of the solid electrolyte can be increased, and thus the lithium ion conductivity can be effectively improved. Furthermore, since the specific surface area is not excessively large, the generation of hydrogen sulfide can be effectively suppressed.

The solid electrolyte of the present invention can be suitably produced using the method described below. A Li element source, a P element source, a S element source, and a Br element source can be used as the raw materials. For example, lithium sulfide ($Li_2S$) can be used as the Li element source. For example, phosphorus pentasulfide ($P_2S_5$) can be used as the P element source. As for the S element source, if the Li element source and/or the P element source is a sulfide, the sulfide can be used as the S element source. Lithium bromide can be used as the Br element source. The raw material composition in which these raw materials are mixed such that the Li element, the P element, the S element, and the Br element are in a predetermined molar ratio is milled. The milled raw material composition is then fired in an inert gas atmosphere or in an atmosphere containing hydrogen sulfide gas.

In particular, in this production method, the desired solid electrolyte can be successfully produced by controlling the particle size and crystal structure of the raw material composition. Specifically, it is advantageous to appropriately adjust the operating conditions of a media mill for use in mixing and milling of the raw material composition to suppress agglomeration and compounding of the raw materials and grain growth and to keep the particle size of the raw materials in a relatively small state. It is also advantageous to appropriately adjust the operating conditions of a media mill for use in mixing and milling of the raw material composition such that vitreous substances and argyrodite-type crystal structures are not formed and the crystal structure derived from the raw materials remains. Accordingly, the solid phase reaction of the raw material composition can progress non-uniformly in the firing process described below. As a result, it is easy to obtain a solid electrolyte in which the peak A, which can be separated into the peak A1 and the peak A2 through waveform separation described above, is observed. Furthermore, since excessive milling is not performed, the crystallite size of the compound having an argyrodite-type crystal structure obtained in the firing process described below is suppressed to become excessively large, and, furthermore, since excessive milling energy does not have to be applied in the milling process described below, the exposure of unstable newborn surfaces is suppressed and the generation of hydrogen sulfide is suppressed.

Media mills such as bead mills and ball mills are preferably used to mix and mill the raw material composition. The energy applied during milling is preferably set to the extent that milling of the raw material composition occurs but no mechanochemical reaction occurs. The plate speed of the media mill is preferably 500 rpm or less, more preferably 400 rpm or less, and even more preferably 300 rpm or less, for example. Furthermore, the processing time of the media mill is 5 minutes or longer, and more preferably 30 minutes or longer, for example. Meanwhile, the processing time is preferably 15 hours or shorter, more preferably 12 hours or shorter, and even more preferably 10 hours or shorter, for example.

After the raw material composition has been mixed and milled in this manner, the raw material composition is fired. The firing is preferably performed in an inert gas atmosphere such as nitrogen gas or an atmosphere containing hydrogen sulfide gas. The atmosphere containing hydrogen sulfide gas may be 100% hydrogen sulfide gas or a mixture of hydrogen sulfide gas and an inert gas such as argon. In particular, it is preferable to use an inert gas atmosphere such as nitrogen gas. The reason for this is that, when the sulfur partial pressure in the atmosphere is lowered, solid phase reactions in the raw material composition are less likely to progress, and the formation of an argyrodite-type crystal structure can be made non-uniform, thereby making it easier to obtain a solid electrolyte in which the peak A, which can be separated into the peak A1 and the peak A2 through waveform separation described above, is observed. From an industrial point of view as well, it is preferable to perform firing in an inert gas atmosphere, which is easy to handle.

The firing temperature is preferably 350°C or higher, more preferably 420°C or higher, and even more preferably 470°C or higher, for example. Meanwhile, the firing temperature is preferably 600°C or lower, more preferably 550°C or lower, and even more preferably 520°C or lower, for example.

The firing time is preferably 0.5 hours, and more preferably 2 hours or longer, for example. Meanwhile, the firing time is preferably 20 hours or shorter, more preferably 10 hours or shorter, and even more preferably 5 hours or shorter, for example. The reason for this is that a solid electrolyte having a crystalline phase with an argyrodite-type crystal structure can be suitably obtained.

The fired product obtained in this manner is subjected to a predetermined milling process. When milling the fired product, either dry or wet milling may be performed, or both of them may be performed in combination. The fired product obtained by mixing, milling, and firing the raw material composition described above is a composite of multiple argyrodite-type crystal structure compounds with different composition ratios and crystallinities due to non-uniform solid phase reactions. Due to this aspect, the number of grain boundaries is larger than that of the fired product produced through uniform solid phase reactions, and the desired grain size can be obtained even with less milling energy in the milling process of the fired product. As a result, according to this production method, defects in the argyrodite-type crystal structure is suppressed. As a result, it is easy to obtain solid electrolyte particles in which the reactivity with moisture is suppressed and hydrogen sulfide is less likely to be generated. Also, according to this production method, since the fired product has many crystal grain boundaries, the ratio of highly reactive newborn surfaces exposed in the milling process can be reduced, and the generation of hydrogen sulfide is suppressed from this point of view as well.

From the viewpoint of causing non-uniform solid phase reactions described above to occur, the X element constituting the solid electrolyte is more desirably a Br element or an I element having relatively low melting points and capable of causing the solid phase reaction to occur with less thermal energy, compared with a Cl element having a high melting point and requiring much thermal energy for the solid phase reaction.

On the other hand, from the viewpoint of improving the ion conductivity of the solid electrolyte having the crystalline phase with the argyrodite-type crystal structure, it is more desirable to use a Cl element or a Br element.

In consideration of the above, it is particularly desirable to use a Br element alone or to use a Br element and a Cl element in combination, as the X element constituting the solid electrolyte, in order to sufficiently achieve the effects of the present invention.

The solid electrolyte obtained using the above-described method can be used as a material that constitutes a solid electrolyte layer, a positive electrode layer, or a negative electrode layer. Specifically, the solid electrolyte of the present invention can be used in a battery that has a positive electrode layer, a negative electrode layer, and a solid electrolyte layer located between the positive electrode layer and the negative electrode layer. That is to say, the solid electrolyte can be used in a so-called solid-state battery. More specifically, the solid electrolyte can be used in a lithium solid-state battery. The lithium solid-state battery may be a primary battery or a secondary battery. There is no particular limitation on the shape of the battery, and, for example, the shapes of laminate-type batteries, cylindrical batteries, rectangular batteries, and the like may be adopted. The term "solid-state battery" encompasses, in addition to a solid-state battery that does not contain any liquid substance or gel substance as the electrolyte, a battery that contains a liquid substance or a gel substance as the electrolyte in an amount of, for example, 50 mass% or less, 30 mass% or less, or 10 mass% or less.

In the case where the solid electrolyte of the present invention is contained in a solid electrolyte layer, the solid electrolyte layer can be produced by, for example, forming a coating film on a substrate using, for example, a method in which a slurry constituted by the solid electrolyte, a binder, and a solvent is dripped onto the substrate and leveled off with a doctor blade or the like, a method in which the substrate and the slurry are brought into contact with each other, followed by cutting with an air knife, or a screen printing method, and then removing the solvent from the coating film through heat drying. Alternatively, the solid electrolyte layer can also be produced by forming the solid electrolyte in powder form into a green compact by pressing or the like, and then appropriately processing the green compact.

Typically, the thickness of the solid electrolyte layer is preferably from 5 to 300 $\mu$m, and more preferably from 10 to 100 $\mu$m, from the viewpoint of the balance between the short circuit prevention and the volumetric capacity density.

The solid electrolyte of the present invention is used in combination with an active material and constitutes an electrode material mixture. The ratio of the solid electrolyte in the electrode material mixture is typically from 10 to 50 mass%. The electrode material mixture may also contain other materials such as a conductivity aid and a binder when necessary. Electrode layers such as a positive electrode layer and/or a negative electrode layer can be formed by mixing the electrode material mixture and a solvent to prepare a paste, applying the paste onto a current collector such as aluminum foil, and drying the applied paste.

As a positive electrode material constituting the positive electrode layer, positive electrode materials that are used as positive electrode active materials for lithium ion batteries can be used as appropriate. Examples of the positive electrode material include positive electrode active materials containing lithium, or more specifically, a spinel-type lithium transition metal oxide, a lithium metal oxide having a layered structure, and the like. The energy density can be increased by using a high-voltage positive electrode material as the positive electrode material. In addition to the positive electrode active material, the positive electrode material may contain a conductive material, or may contain other materials.

As a negative electrode material constituting the negative electrode layer, negative electrode materials that are used as negative electrode active materials for lithium ion batteries can be used as appropriate. The solid electrolyte of the present invention is electrochemically stable, and therefore, lithium metal or carbon-based materials such as graphite, artificial graphite, natural graphite, and non-graphitizable carbon (hard carbon), which are materials that allow charge and discharge to be performed at a low potential (about 0.1 V vs Li$^+$/Li) comparable to that of lithium metal, can be used as the negative electrode material. The energy density of the solid-state battery can be significantly increased in this manner. Furthermore, silicon or tin, which are promising as high-capacity materials, can also be used as the active material. In a battery that uses a common electrolytic solution, as the battery is charged and discharged, the electrolytic solution reacts with an active material, causing corrosion on the surface of the active material, and thus, the battery characteristics markedly deteriorate. By contrast, in a battery in which the solid electrolyte of the present invention is used instead of the electrolytic solution, and silicon or tin is used as the negative electrode active material, the above-described corrosion reaction does not occur, and the durability of the battery can be improved accordingly. The negative electrode material may also contain a conductive material, or may contain other materials, in addition to the negative electrode active material.

## Examples

Hereinafter, the present invention will be described in greater detail using examples. However, the scope of the present invention is not limited to the examples below.

## Example 1

An Li$_2$S powder, a P$_2$S$_5$ powder, and an LiBr powder were weighed to obtain the compositions shown in Table 1 below. These powders were milled and mixed using a planetary ball mill (P-5 manufactured by Fritsch) to obtain a raw material composition. The resulting raw material composition was fired to obtain a fired product. The firing was performed using a tube electric furnace. During the firing, nitrogen gas was circulated in the electric furnace. The firing temperature was set to 500°C, and firing was performed for 4 hours. The fired product was milled using a ball mill to obtain a desired solid electrolyte powder. As a result of XRD measurement, it was seen that this powder has a crystalline phase with the argyrodite-type crystal structure.

## Examples 2 to 4

Solid electrolyte powders were obtained in the same way to that of Example 1, except that the raw material composition was prepared so as to obtain the compositions shown in Table 1 below. It was seen that these powders have a crystalline phase with the argyrodite-type crystal structure.

## Comparative Examples 1 to 3

The raw material powders were prepared so as to obtain the compositions shown in Table 1 below. Furthermore, as indicated in the table, the raw material compositions were milled under the conditions that the rotational speed of the planetary ball mill was higher and the time was longer than in the examples. Also, as indicated in the table, the raw material compositions were fired at a lower temperature and for a longer period of time than in the examples. Solid electrolyte powders were obtained in the same way to that of Example 1, except for these aspects.

## XRD Measurement

The solid electrolytes obtained in the examples and the comparative examples were subjected to XRD measurement under the following conditions and waveform separation of diffraction peaks was performed according to the flowchart shown in Fig. 1. The peak position, $I_{A2}/I_{A1}$, and $W_{A2}/W_{A1}$ of the peak A1 and the peakA2 obtained through the waveform separation were obtained. Table 1 shows the results. Fig. 2 shows results of waveform separation of diffraction peaks of the solid electrolyte obtained in Example 1.

The XRD measurement was performed using an X-ray diffractometer "Smart Lab" manufactured by Rigaku Corporation. The measurement conditions were as follows: no atmospheric exposure; scan axis: $2\theta/\theta$; scan range: from $10°$ to $120°$; step width: $0.02°$; and scan speed: $1°$/min. CuK$\alpha$1 radiation using a Johansson type crystal was used as the X-ray source. A one-dimensional detector was used for the detection. The measurement was performed such that the intensity at $21.3 \pm 1.0°$ was from 100 to 700 counts and the maximum peak intensity within the range from $10°$ to $120°$ was 1000 counts or more.

## Lithium Ion Conductivity

The lithium ion conductivities of the solid electrolytes obtained in the examples and the comparative examples were measured using the following method. Table 1 below shows the results.

Each solid electrolyte was uniaxially pressed under an applied load of about 6 t/cm$^2$ in a glove box purged with a sufficiently dried argon gas (with a dew point of -60°C or lower), to thereby produce a sample for lithium ion conductivity measurement constituted by a pellet with a diameter of 10 mm and a thickness of about 1 to 8 mm. The lithium ion conductivity measurement was performed using a Solartron 1255B manufactured by Toyo Corporation. The measurement conditions were as follows. An AC impedance method was performed at a temperature of 25°C, a frequency of 100 Hz to 1 MHz, and an amplitude of 100 mV.

Amount of Hydrogen Sulfide Generated

The amounts of hydrogen sulfide generated by the solid electrolytes obtained in the examples and the comparative examples were measured using the following method. Table 1 below shows the results.

Each solid electrolyte was weighed 2 mg each in a glove box purged with a sufficiently dried argon gas (with a dew point of -60°C or lower) and placed in a bag sealed with laminated film. Then, a glass separable flask with a capacity of 1500 cm$^3$ was placed in an environmental experiment chamber kept at room temperature (25°C) in a dew point -30°C atmosphere adjusted by mixing dry air and atmosphere. After the separable flask was held until its interior became the same as the environment inside the environmental experiment chamber, the sealed bag containing the solid electrolyte was opened inside the environmental experiment chamber and the solid electrolyte was quickly placed inside the separable flask. A fan was installed in the separable flask to control gas retention, and the fan was rotated to stir the atmosphere in the separable flask. The concentration of hydrogen sulfide generated during 30 minutes from immediately after sealing the separable flask was measured after 30 minutes using a hydrogen sulfide sensor (GX-2009 manufactured by Riken Keiki Co., Ltd.). The minimum value measured by the hydrogen sulfide sensor is 0.1 ppm.

Table 1

| | Composition formula | Rotational speed and time of planetary ball mill for milling and mixing raw material composition | Firing Firing temperature and time | Composition ratio (molar ratio) | | Peak A1 | | | Peak A2 | | | $I_{A2}/I_{A1}$ | $W_{A2}/W_{A1}$ | Lithium ion conductivity (mS/cm) | Amount of hydrogen sulfide generated (ppm) |
| | | | | X/P | S/P | Position (°) | Intensity $I_{A1}$ (counts) | Half-value width $W_{A1}$ (°) | Position (°) | Intensity $I_{A2}$ (counts) | Half-value width $W_{A2}$ (°) | | | | |
|---|---|---|---|---|---|---|---|---|---|---|---|---|---|---|---|
| Ex. 1 | $Li_{5.4}PS_{4.4}Br_{1.6}$ | 100 rpm, 10 hr | 500°C, 4 hr | 1.63 | 4.34 | 25.20 | 13951 | 0.09 | 25.21 | 7147 | 0.42 | 0.51 | 4.7 | 2.98 | 10.0 |
| Ex. 2 | $Li_{5.2}PS_{4.4}Br_{1.4}$ | 100 rpm, 10 hr | 500°C, 4 hr | 1.40 | 4.28 | 25.21 | 16160 | 0.12 | 25.23 | 7375 | 0.46 | 0.46 | 3.8 | 2.69 | 11.3 |
| Ex. 3 | $Li_{5.6}PS_{4.4}Br_{1.8}$ | 100 rpm, 10 hr | 500°C, 4 hr | 1.86 | 4.36 | 25.22 | 16170 | 0.12 | 25.24 | 7442 | 0.52 | 0.46 | 4.3 | 3.01 | 10.0 |
| Ex. 4 | $Li_{6.0}PS_{4.4}Br_{2.2}$ | 100 rpm, 10 hr | 500°C, 4 hr | 2.29 | 4.34 | 25.24 | 9352 | 0.12 | 25.26 | 4477 | 0.62 | 0.48 | 5.2 | 1.80 | 5.0 |
| Com.Ex. 1 | $Li_{5.5}PS_{4.5}Br_{1.5}$ | 380 rpm, 20 hr | 450°C, 6 hr | 1.52 | 4.32 | 25.22 | 13876 | 0.09 | 25.30 | 7269 | 0.28 | 0.52 | 3.1 | 1.95 | 16.3 |
| Com.Ex. 2 | $Li_{5.75}PS_{4.75}Br_{1.25}$ | 380 rpm, 20 hr | 450°C, 6 hr | 1.23 | 4.51 | 25.22 | 14298 | 0.12 | 25.27 | 4604 | 0.40 | 0.32 | 3.3 | 2.25 | 22.5 |
| Com.Ex. 3 | $Li_{5.5}PS_{4.5}Br_{1.5}$ | 500 rpm, 15 hr | 400°C, 5 hr | 1.43 | 4.26 | 25.21 | 14420 | 0.12 | 25.26 | 5002 | 0.42 | 0.35 | 3.5 | 3.18 | 18.8 |

As can be clearly seen from the results shown in Table 1, the solid electrolytes obtained in the examples have higher lithium-ion conductivity and are less likely to generate hydrogen sulfide compared with the solid electrolytes in the comparative examples.

**Industrial Applicability**

The present invention provides a solid electrolyte in which generation of hydrogen sulfide is suppressed.

**Claims**

1. A solid electrolyte comprising a lithium (Li) element, a phosphorus (P) element, a sulfur (S) element, and a halogen (X) element,

   wherein the halogen (X) element contains at least a bromine (Br) element,
   the solid electrolyte has a crystalline phase having an argyrodite-type crystal structure, the solid electrolyte has a peak A in a range of $2\theta = 25.2 \pm 1.0°$ in an X-ray diffraction pattern measured by an X-ray diffractometer (XRD) using Cu$k\alpha$1 as a radiation source, when the peak A is separated into two peaks consisting of a peak A1 and a peak A2 through waveform separation, an intensity of the peak A1 is taken as $I_{A1}$, and an intensity of the peakA2 is taken as $I_{A2}$, a ratio ($I_{A2}/I_{A1}$) of the $I_{A2}$ to the $I_{A1}$ is 0.37 or more, and
   when a half-value width of the peak A1 is taken as $W_{A1}$, and a half-value width of the peak A2 is taken as $W_{A2}$, a ratio ($W_{A2}/W_{A1}$) of the $W_{A2}$ to the $W_{A1}$ is 3.2 or more.

2. The solid electrolyte as set forth in claim 1, wherein a molar ratio (Br/X) of the bromine (Br) element to the halogen (X) element is 0.5 or more.

3. The solid electrolyte as set forth in claim 1 or 2,

   wherein a molar ratio (X/P) of the halogen (X) element to the phosphorus (P) element is from 1.0 to 3.0, and a molar ratio (S/P) of the sulfur (S) element to the phosphorus (P) element is from 3.0 to 5.0.

4. The solid electrolyte as set forth in any one of claims 1 to 3, wherein a ratio ($I_{A2}/I_{A1}$) of the $I_{A2}$ to the $I_{A1}$ is 1.40 or less.

5. The solid electrolyte as set forth in any one of claims 1 to 4, wherein a ratio ($W_{A2}/W_{A1}$) of the $W_{A2}$ to the $W_{A1}$ is 15.0 or less.

6. An electrode material mixture comprising the solid electrolyte as set forth in any one of claims 1 to 5 and an active material.

7. A solid electrolyte layer comprising the solid electrolyte as set forth in any one of claims 1 to 5.

8. A battery comprising a positive electrode layer, a negative electrode layer, and a solid electrolyte layer between the positive electrode layer and the negative electrode layer, wherein the battery contains the solid electrolyte as set forth in any one of claims 1 to 5.

Fig. 1

Analysis flow

**Step 1**
Start fitting using initial values in right table according to least squares method

— Converge → End analysis

— Not converge →

**Step 2**
Perform fitting again while changing coefficient of intensity $A_g$ of peak A1 from ×0.5 to ×0.6

— Converge → End analysis

— Not converge →

**Step 3**
Repeat fitting while incrementing coefficient of intensity $A_g$ of peak A1 by 0.1 (e.g., to ×0.7, 0.8, ...)

— Converge → End analysis

— Not converge →

**Step 4**
If factor does not converge even when coefficient of intensity $A_g$ of peak A1 reaches ×1.0, it is determined that fitting cannot be performed with peaks A1 and A2
Perform fitting only with peak A1 while setting intensity of peak A2 to 0 (without including peak A2)

### Parameter Initial Values

| | Peak A1 (Gaussian function $y_g$) | | | Peak A2 (Asymmetric double sigmoidal function $y_s$) | | | | |
|---|---|---|---|---|---|---|---|---|
| Parameter | $A_g$ | $x_{cg}$ | $w_g$ | $A_s$ | $x_{cs}$ | $w_{1s}$ | $w_{2s}$ | $w_{3s}$ |
| Initial Value | Real data peak intensity ×0.5 | Real data peak position | Real data half-value width ×0.5 | Real data peak intensity ×0.5 | Real data peak position | Real data 1/4-value width ×0.5 | Real data 1/4-value width ×0.5 | Real data 1/4-value width ×0.5 |

[Fig. 2]

<table>
<tr><td colspan="2">**INTERNATIONAL SEARCH REPORT**</td><td>International application No.<br><br>**PCT/JP2022/008382**</td></tr>
</table>

**A.    CLASSIFICATION OF SUBJECT MATTER**

*H01B 1/06*(2006.01)i; *H01B 1/10*(2006.01)i; *H01M 10/0562*(2010.01)i
FI:    H01B1/10; H01M10/0562; H01B1/06 A

According to International Patent Classification (IPC) or to both national classification and IPC

**B.    FIELDS SEARCHED**

Minimum documentation searched (classification system followed by classification symbols)

H01M10/0562; H01B1/06; H01B1/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | WO 2020/095936 A1 (MITSUI MINING & SMELTING CO) 14 May 2020 (2020-05-14) paragraphs [0022]-[0023], [0030]-[0044], [0059]-[0063], [0080]-[0081], [0102], [0104]-[0107] | 1-8 |
| A | JP 2020-095937 A (MITSUI MINING & SMELTING CO) 14 May 2020 (2020-05-14) paragraphs [0075]-[0102] | 1-8 |
| A | WO 2018/047566 A1 (IDEMITSU KOSAN CO) 15 March 2018 (2018-03-15) paragraphs [0094]-[0114] | 1-8 |

☐ Further documents are listed in the continuation of Box C.    ☑ See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |
| Date of the actual completion of the international search<br><br>**22 April 2022** | Date of mailing of the international search report<br><br>**10 May 2022** |
| Name and mailing address of the ISA/JP<br><br>**Japan Patent Office (ISA/JP)**<br>**3-4-3 Kasumigaseki, Chiyoda-ku, Tokyo 100-8915**<br>**Japan** | Authorized officer<br><br><br><br>Telephone No. |

Form PCT/ISA/210 (second sheet) (January 2015)

**INTERNATIONAL SEARCH REPORT**
Information on patent family members

International application No.

**PCT/JP2022/008382**

| Patent document cited in search report | | | Publication date (day/month/year) | Patent family member(s) | Publication date (day/month/year) |
|---|---|---|---|---|---|
| WO | 2020/095936 | A1 | 14 May 2020 | US 2021/0028486 A1 paragraphs [0033]-[0035], [0049]-[0070], [0101]-[0107], [0133]-[0136], [0166]-[0174], table 1 | |
| JP | 2020-095937 | A | 14 May 2020 | (Family: none) | |
| WO | 2018/047566 | A1 | 15 March 2018 | US 2019/0140314 A1 paragraphs [0226]-[0264] | |

Form PCT/ISA/210 (patent family annex) (January 2015)

**EP 4 307 318 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016156064 A1

- US 2019148769 A1